(19) Europäisches Patentamt
European Patent Office
Office européen des brevets

(11) **EP 3 485 598 B1**

(12) **EUROPÄISCHE PATENTSCHRIFT**

(45) Veröffentlichungstag und Bekanntmachung des Hinweises auf die Patenterteilung:
**09.09.2020** Patentblatt **2020/37**

(21) Anmeldenummer: **17751242.3**

(22) Anmeldetag: **12.07.2017**

(51) Int Cl.:
*H04L 9/00* *(2006.01)*      *H04L 9/06* *(2006.01)*

(86) Internationale Anmeldenummer:
**PCT/EP2017/000830**

(87) Internationale Veröffentlichungsnummer:
**WO 2018/010843 (18.01.2018 Gazette 2018/03)**

(54) **WHITE BOX AES IMPLEMENTIERUNG**

WHITE BOX AES IMPLEMENTATION

IMPLÉMENTATION D'AES EN BOÎTE BLANCHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.07.2016 DE 102016008456**

(43) Veröffentlichungstag der Anmeldung:
**22.05.2019** Patentblatt **2019/21**

(73) Patentinhaber: **Giesecke+Devrient Mobile Security GmbH**
**81677 München (DE)**

(72) Erfinder: **BAUER, Sven**
**85591 Vaterstetten (DE)**

(56) Entgegenhaltungen:
- **CHOW S ET AL: "WHITE-BOX CRYPTOGRAPHY AND AN AES IMPLEMENTATION", SELECTED AREAS IN CRYPTOGRAPHY : 9TH ANNUAL INTERNATIONAL WORKSHOP ; REVISED PAPERS / SAC 2002, ST. JOHN'S, NEWFOUNDLAND, CANADA, AUGUST 15 - 16, 2002; [LECTURE NOTES IN COMPUTER SCIENCE ; 2595], SPRINGER VERLAG, BERLIN (DE), Bd. 2595, 15. August 2002 (2002-08-15), Seiten 250-270, XP002521155, ISBN: 978-3-540-00622-0 in der Anmeldung erwähnt**
- **"Announcing the advanced encryption standard (AES)", FEDERAL INFORMATION PROCESSING STANDARDS PUBLICATION, U.S. DEPT. OF COMMERCE, WASHINGTON, DC, US, 26. November 2001 (2001-11-26), Seiten 1-47, XP002968399, ISSN: 0083-1816 in der Anmeldung erwähnt**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gebiet der Erfindung

Die Erfindung betrifft eine White Box Implementierung des kryptographischen Algorithmus AES (Advanced Encryption Standard). Genauer betrifft die Erfindung eine Prozessor-Einrichtung mit einer White Box Implementierung des kryptographischen Algorithmus AES.

Unter einer Prozessor-Einrichtung im Sinn der Erfindung wird ein Gerät oder sonstiger Gegenstand mit einem Prozessor verstanden, oder eine Emulation eines solchen Geräts auf einem anderen Gerät. Beispiele für Geräte sind ein mobilfunkfähiges Endgerät, ein Chipset für ein mobilfunkfähiges Endgerät und eine Smartcard. Beispiele für mobilfunkfähige Endgeräte sind einerseits mobile Endgeräte wie Smartphones und andererseits M2M Device für ein Industrieumfeld. Ein Beispiel für ein Gerät, auf dem eine Emulation eines der erstgenannte Geräte vorgesehen ist, ist ein Personal Computer oder PC, mit einer Emulation z.B. eines mobilfunkfähige Endgeräts / Smartphone, oder eines Smartphone-Chipset etc.. Als Prozessor-Einrichtung wird also beispielsweise auch eine Emulation eines Chipset für ein mobilfunkfähiges Endgerät oder eines mobilfunkfähigen Endgeräts oder einer Smartcard auf einem PC angesehen.

In kryptographischen Algorithmen werden sicherheitskritische Daten verarbeitet, auf die Unbefugte keinen Zugriff haben sollen. Beispielsweise werden Eingangsdaten mittels geheim zu haltender Schlüssel zu Ausgangsdaten verarbeitet. Bei der traditionellen Grey Box Kryptographie werden sicherheitskritische Daten dadurch vor dem Zugriff durch Unbefugte geschützt, dass die Daten in einer Umgebung abgespeichert werden, auf welche Unbefugte theoretisch keinen Zugriff haben. Eine perfekt zugriffsgesicherte Umgebung wäre Black Box kryptographisch gesichert, Unzulänglichkeiten in einer realen Implementierung der Umgebung können jedoch Zugriffe ermöglichen, weshalb eine reale Implementierung einer zugriffsgesicherten Umgebung lediglich Grey Box gesichert ist.

Authentisierungs- und Verschlüsselungs-Algorithmen für die Mobilfunk-Kommunikation eines mobilen Endgeräts im Mobilfunk-Netzwerk sind aktuell in einem Hardware-technisch eigenständigen Sicherheitselement des mobilen Endgeräts implementiert, beispielsweise einem UICC (Universal Integrated Circuit Card) vom Formfaktor Plug-In oder embedded. Unter einem Plug-In UICC wird eine herausnehmbare (U)SIM-Karte verstanden (SIM = Subscriber Identity Module, U = Universal). Unter einem embedded UICC oder eUICC wird ein Einlötmodul mit ansonsten identischer Funktionalität wie ein Plug-In UICC verstanden. Im UICC sind zudem die sicherheitskritischen Daten, hier kryptographische Schlüssel, für die Authentisierungs- und Verschlüsselungs-Algorithmen gespeichert. Die Zukunft hardware-technisch getrennter Sicherheitselemente wie PlugIn UICC oder eUICC in mobilen Endgeräten ist ungewiss, und es könnte künftig auch mobile Endgeräte ohne hardware-technisch getrenntes Sicherheitselement geben.

Verbreitet werden auf mobilen Endgeräten Zusatz-Applikationen gespeichert, die über den originären Anwendungsbereich der Telefonie hinausgehen, und die ebenfalls sicherheitskritische Daten verarbeiten. Die Zusatz-Applikationen werden typischerweise als Apps direkt in einem Prozessor-Chip des mobilen Endgeräts gespeichert. Dort sind die Zusatz-Applikationen und ihre sicherheitskritischen Daten vergleichsweise ungeschützt. Typische Prozessor-Chips eines mobilen Endgeräts sind ein vergleichsweise gut gesicherter Secure Processor, ein vor allem für das Speichern von Zusatz-Applikationen vorgesehener Application Processor und ein für die Funckommunikation des Endgeräts im Mobilfunknetz vorgesehener Baseband Processor. Zusatz-Applikationen wie Apps sind typischerweise überwiegend oder ganz im Application Processor gespeichert.

Sofern das UICC es erlaubt, können Zusatz-Applikationen und ihre sicherheitskritischen Daten (z.B. Schlüssel) im UICC abgespeichert werden. Insbesondere können sicherheitskritische Anteile von im Application Processor gespeicherten Zusatz-Applikationen in das UICC ausgelagert sein, das ein höheres Sicherheitsniveau hat als der Application Processor. Der Speicherplatz in UICCs ist relativ begrenzt. Manche UICC erlauben zudem kein Abspeichern von Zusatz-Applikationen oder Teilen davon im UICC.

Beispiele für Zusatz-Applikationen sind Zahlungsverkehrs-Applikationen zum Bezahlen mittels des mobilen Endgeräts an einem kontaktlosen (z.B. NFC-basierten) Zahlungsterminal. Weiter werden auf mobilen Endgeräten wie z.B. Smartphones zunehmend Zusatz-Applikationen für kryptographische Dienste wie z.B. Sprachverschlüsselung oder Datenverschlüsselung genutzt. Kryptographische Teilaufgaben der Zusatz-Applikationen (z.B. auch von Zahlungsverkehrs-Applikationen) wie z.B. Verschlüsselung, Entschlüsselung, Signaturbildung oder Signaturverifizierung werden durch Implementierungen kryptographischer Algorithmen durchgeführt.

Stand der Technik

Bei einer White Box Implementierung eines kryptographischen Algorithmus wird der Ansatz verfolgt, die sicherheitskritischen Daten, insbesondere geheime kryptographische Schlüssel, derart in der Implementierung zu verbergen, dass ein Angreifer, der vollen Zugriff ("total access") auf die Implementierung hat, nicht dazu in der Lage ist, die sicherheitskritischen Daten aus der Implementierung zu extrahieren. White Box Kryptographie ist insbesondere anwendbar und sinnvoll für mobile Endgeräte, die kein eigenständiges Sicherheitselement haben, so dass sicherheitskritische Daten in einer nicht vertrauenswürdigen Umgebung abgespeichert sind.

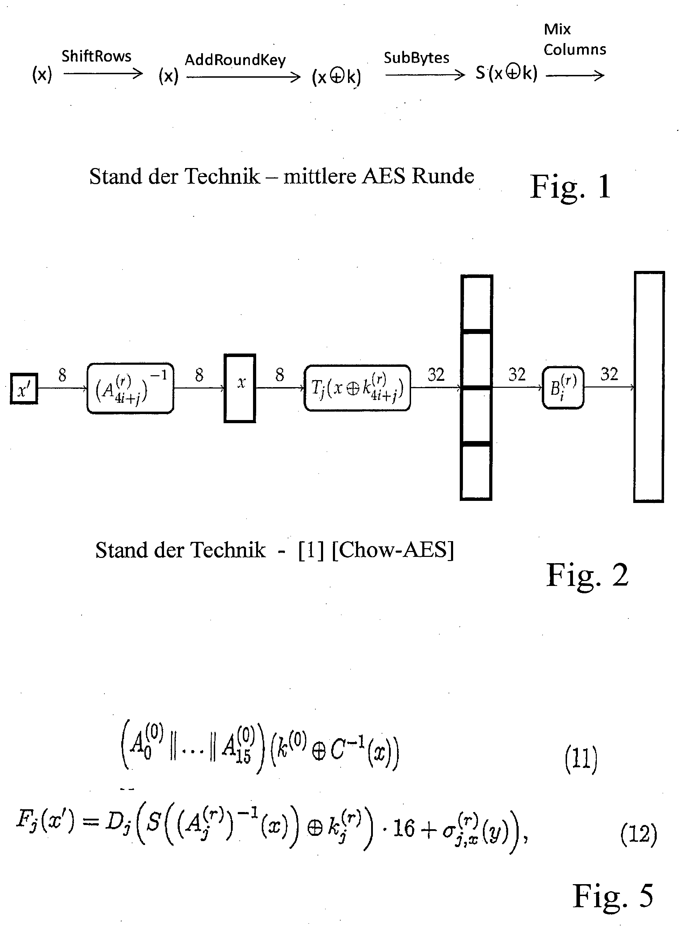

Die Erfindung schafft eine Lösung für den kryptographischen Blockchiffrier-Algorithmus Advanced Encryption Standard AES, der in [3] [NIST-AES] NIST fips 197, "Announcing the ADVANCED ENCRYPTION STANDARD (AES), November 26, 2001 veröffentlicht ist. Der AES umfasst eine Anzahl von Nr Runden. Gemäß [3], Kapitel 5.1 umfasst eine Basis-Runde des AES die vier Transformationen SubBytes, ShiftRows, MixColumns und AddRoundKey. Die letzte Runde differiert etwas von den übrigen Runden und enthält z.B. keine MixColumn Transformation. Die SubBytes Transformation ist eine nicht-lineare Byte-Substitution, die unter Verwendung einer Substitutionstabelle, genannt S-Box, durchgeführt wird. Fig. 1 zeigt in schematischer Darstellung eine mittlere AES-Runde, also eine Runde, die nicht die erste und nicht die letzte AES-Runde ist, und die die Transformationen ShiftRows, AddRoundKey, SubBytes und MixColumns umfasst. Dabei werden Eingangsdaten x und Schlüsseldaten k verarbeitet.

Der Fachartikel [2] [Chow-AES] S. Chow, P. Eisen, H. Johnson, P.C. van Oorschot, "White-Box Cryptography and an AES Implementation", in proceedings of the Ninth Workshop on Selected Areas in Cryptography (SAC 2002), pages 250-270, 2002, offenbart, für einen AES-128 mit einer Schlüssellänge von 128 Bit und Nr = 10 Runden, eine White Box Implementierung des AES-Kryptoalgorithmus, bei welcher der AES durch Schlüssel-abhängige Tabellen (lookup tables) implementiert ist (vgl. Abstract). Weiter werden in den Tabellen statt einzelner Transformationen Kompositionen von Transformationen implementiert (Abstract). Die Ausführung des AES erfolgt durch eine Serie von Lookups, d.h. Tabellenaufrufen, in den Schlüssel-abhängigen Tabellen. Gemäß [2] Kapitel 3, Kapitel-Eingang auf Seite 6, wird die White-Box-Maskierung dadurch erreicht, dass jeder Schritt im AES-Algorithmus mit zufällig gewählten Bijektionen zusammengesetzt wird. Gemäß [2] Kapitel 3.1 wird der Schlüssel in der S-Box Operation der SubBytes Transformation untergebracht, indem schlüsselabhängige Tabellen (lookup tables) oder "T-Boxen" vom Konstruktionsprinzip T(x) = S(x XOR k) verwendet werden, wobei x ein S-Box Eingabewert ist, k der Schlüssel, S die AES S-Box und XOR eine XOR-Operation. Jede T-Box ist somit eine Komposition aus einer S-Box und der vorangehenden AddRoundKey Transformation. Für die konkrete Konstruktion der T-Boxen gibt [2] Kapitel 4 und Fig. 1 vier Möglichkeiten I-IV an. Insbesondere ist in Fig. 1 als Typ II eine Implementierung einer AES-Runde dargestellt, bei der Runden-Eingangswerte, die einer T-Box Transformation der Runde zugeführt werden, mittels einer bijektiven Abbildung ("8x8 mixing bijection") White Box maskiert sind.

Fig. 2 der vorliegenden Anmeldung zeigt eine Möglichkeit, die in [2] [Chow-AES], Fig. 1, Type II angedeutete White Box maskierte T-Box in einem Tabellenaufruf zu verwirklichen. Fig. 2 zeigt, für eine r-te Runden des AES eine Abbildung eines Wertes x' mittels zufällig gewählter Bijektion A(4i+j)(r) (die Bijektionen sind in [2], Kapitel 3 ohne Bezeichnung), schlüsselabhängiger T-Box Tj(x XOR k(4i+j)(r)) und Permutation Bj(r), mit j = 0, ... 3. Durch die Bijektionen A wird Diffusion erzeugt, durch die Permutationen B Konfusion im Sinne kryptographischer Designkriterien.

In der Fachveröffentlichung [3] "Differential Computation Analysis: Hiding your White-Box Designs is Not Enough", J.W. Bos, Ch. Hubain, W. Michiels, and Ph. Teuwen, eprint.iacr.org/2015/753, der Firma NXP, sowie in der Patentanmeldung 102014016548.5 der Anmelderin der vorliegenden Anmeldung sind zwei einander ähnliche Testverfahren offenbart, mit denen sich jeweils aus einer White Box Implementierung eines Kryptoalgorithmus der geheime Schlüssel mit statistischen Methoden ermitteln ließ. Gegenüber solchen Angriffen ist auch die AES White Box Implementierung aus [2] noch anfällig.

Im Stand der Technik [4] [DaemenRijmen] wird vorgeschlagen, eine SubBytes Transformation mit einer AddRoundKey Transformation zu kombinieren zu kombinierten Tabellen $T'_j{}^{(r)}$ gemäß:

$$T'_0{}^{(r)}(x) = ( k_0{}^{(r+1)}, k_1{}^{(r+1)}, k_2{}^{(r+1)}, k_3{}^{(r+1)} ) \; XOR \; T_0(x) ;$$

$$T'_1{}^{(r)}(x) = ( k_4{}^{(r+1)}, k_5{}^{(r+1)}, k_6{}^{(r+1)}, k_7{}^{(r+1)} ) \; XOR \; T_1(x) ;$$

$$T'_2{}^{(r)}(x) = ( k_8{}^{(r+1)}, k_9{}^{(r+1)}, k_{10}{}^{(r+1)}, k_{11}{}^{(r+1)} ) \; XOR \; T_2(x) ;$$

$$T'_3{}^{(r)}(x) = ( k_{12}{}^{(r+1)}, k_{13}{}^{(r+1)}, k_{14}{}^{(r+1)}, k_{15}{}^{(r+1)} ) \; XOR \; T_3(x).$$

Zusammenfassung der Erfindung

Der Erfindung liegt die Aufgabe zugrunde, eine Prozessor-Einrichtung mit einer White Box Implementierung des kryptographischen Algorithmus AES anzugeben, die speziell gehärtet ist, so dass auch mittels auf Seitenkanal-Ausgaben angewandter statistischer Methoden möglichst wenige oder keine geheimen Informationen aus dem Algorithmus gewonnen werden können. Insbesondere sollen spezielle Implementierungsdetails angegeben werden, mittels derer eine speziell gehärtete Implementierung erreicht werden kann.

Die Aufgabe wird gelöst durch eine Prozessor-Einrichtung nach Anspruch 1. Vorteilhafte Ausgestaltungen der Erfindung sind in den abhängigen Ansprüchen angegeben.

Auf der erfindungsgemäßen Prozessor-Einrichtung nach Anspruch 1 ist eine ausführbare White Box maskierte Implementierung des kryptographischen Algorithmus AES implementiert. Der AES umfasst eine Mehrzahl von Runden, in denen unter Verwendung von Runden-Eingangswerten x Runden-Ausgangswerte erzeugt werden. Jede Runde umfasst eine AddRoundKey Transformation, in welcher der Rundenschlüssel k verwendet wird, und eine SubBytes Transformation T. Die Implementierung ist White Box maskiert, wozu am Runden-Eingang zumindest einer oder jeder Runde, anstelle der Runden-Eingangs-Werte x, maskierte Runden-Eingangs-Werte bereitgestellt sind, die vorab erzeugt worden sind, indem auf die Runden-Eingangswerte x eine invertierbare Maskierungs-Abbildung A angewandt worden ist.

Die erfindungsgemäße Prozessor-Einrichtung ist dadurch gekennzeichnet, dass die White Box maskierte Implementierung gehärtet ist. Die Härtung ist dadurch bewirkt, dass am Runden-Eingang der zumindest einen oder jeder Runde, anstelle der Runden-Eingangs-Werte x, White-Box-Runden-Eingangswerte x' = (x | y) bereitgestellt sind. Diese sind gebildet aus einer Konkatenation x | y von: (i) den mittels der invertierbaren Maskierungs-Abbildung A maskierten Runden-Eingangswerten x und (ii) Verschleierungswerten y, die ebenfalls mit der invertierbaren Maskierungs-Abbildung A maskiert sind. Hierbei werden aus den White-Box-Runden-Eingangswerte x' = (x | y) nur die (i) Runden-Eingangswerte x der SubBytes Transformation T zugeführt werden, und die (ii) maskierten Verschleierungswerte y nicht. In die AES-Implementierung, z.B. eine Tabelle, werden somit Werte A(x') = A(x | y) eingespeist und dort Runde für Runde abgearbeitet.

Dadurch dass der invertierbaren Maskierungs-Abbildung A zusätzlich zu den eigentlich interessierenden Runden-Eingangswerten x zudem die Verschleierungswerte y zugeführt werden, wertet ein Angreifer bei statistischen Angriffen teils Werte aus, die auf Berechnungen mit echten Runden-Eingangswerten x beruhen, teils Werte, die auf Berechnungen mit Verschleierungswerten y beruhen. Somit schwindet der Einfluss der echten Runden-Eingangswerte x ganz erheblich oder im besten Fall sogar vollständig. Daher ist gemäß Anspruch 1 eine Prozessor-Einrichtung geschaffen, die speziell gehärtet ist, so dass auch mittels auf Seitenkanal-Ausgaben angewandter statistischer Methoden möglichst wenige oder keine geheimen Informationen aus dem Algorithmus gewonnen werden können.

Gemäß der Erfindung umfasst die Implementierung weiter innerhalb einer jeweiligen Runde, als zusätzliche Transformationen, eine Demaskierungs-Transformation und eine Ummaskierungs-Transformation. Durch die Demaskierungs-Transformation werden die maskierten Eingangswerte x in den Runden-Eingangswerten x' vor der SubBytes-Transformation mittels einer zur Maskierungs-Abbildung A inversen Maskierungs-Abbildung $A^{-1}$ so transformiert, dass die Maskierungs-Abbildung A wieder aufgehoben wird, so dass also der SubBytes Transformation T nicht-maskierte Runden-Eingangswerte x zugeführt werden. Hierdurch werden durch die nicht-lineare SubBytes Transformation die echten Eingangswerte verarbeitet. Dies bedeutet aber nicht, dass nicht-maskierte Runden-Eingangswerte x tatsächlich vorliegen. Vielmehr wird die zusätzliche inverse Maskierungs-Abbildung $A^{-1}$ in eine kombinierte Tabelle integriert sein, in der mehrere Transformationen kombiniert sind. Durch die Ummaskierungs-Transformation werden die Verschleierungswerte y in den Runden-Eingangswerten x' von der Maskierungs-Abbildung A auf eine zufällige invertierbare Abbildung σ ummaskiert, so dass aus mit der Maskierungs-Abbildung A maskierten Verschleierungswerten y mit der zufälligen invertierbare Abbildung σ maskierte Verschleierungswerte y erzeugt werden. Die ursprüngliche Maskierungs-Abbildung A wird in der Regel für einen längeren Zeitraum fest vorgegeben als die Abbildung σ.

Gemäß der Erfindung wird weiter der Runden-Ausgang zumindest einer oder jeder Runde gehärtet, indem am Runden-Ausgang zumindest einer oder jeder Runde eine zufällige invertierbare affine Abbildung B angewandt wird. Die Abbildung B wird angewandt: (i) auf die mit zumindest der SubBytes Transformation T bearbeiteten Runden-Eingangswerte x und (ii) auf die - ggf. mit zumindest der zufälligen invertierbaren Abbildung σ maskierten - Verschleierungswerte y.

Gemäß einer Ausführungsform der Erfindung kann wahlweise an Stelle der SubBytes Transformation eine kombinierte SubBytes Transformation T verwendet werden, welche durch eine Kombination einer herkömmlichen AES SubBytes Transformation S und einer AES MixColumns Transformation MC gebildet ist, gemäß T(x) = (MC) S(x).

Gemäß einer bevorzugten Ausführungsform der Erfindung ist die affine Abbildung A weiter so gestaltet, dass jedes Bit in den Ausgabewerten der affinen Abbildung A von mindestens einem Bit aus den Verschleierungswerten y abhängt, wodurch erreicht wird, dass die Ausgabewerte der affinen Abbildung A statistisch ausgeglichen sind. Hierdurch wird erreicht, dass Ausgabewerte von Transformationen (z.B. SubBytes Transformationen) nicht mit Ausgabewerten, wie sie bei ungeschützten Implementierungen erwartet werden würden, korreliert sind. Daher ist eine solche statistisch ausgeglichene Gestaltung der Abbildung A besonders vorteilhaft.

Die statistische Ausgeglichenheit wird, gemäß einer speziellen Ausführungsform dadurch erreicht, dass die Maskierungs-Abbildung A durch eine Matrix A gebildet ist, in der für die Abbildung der Verschleierungswerte y invertierbare Teilmatrices bereitgestellt sind, wobei in jeder Zeile jeder für Verschleierungswerte y bereitgestellten Teilmatrix mindestens ein Wert einen von Null unterschiedlichen Wert hat. Hierdurch verbleiben keine Eingangswerte x, die ohne Einfluss eines Verschleierungswerts y durch die Abbildung geschleust würden.

Wahlweise ist die Maskierungs-Abbildung A durch eine invertierbare affine Abbildung gebildet. Alternativ ist die Maskierungs-Abbildung A aus einer oder mehreren affinen invertierbaren Abbildungen und einer oder mehreren beliebigen invertierbaren Abbildungen zusammengesetzt ist, so dass die Maskierungs-Transformation insgesamt invertierbar ist.

Wahlweise umfasst der AES eine letzte Runde, die keine MixColumns Transformation umfasst, wobei in der letzten Runde zusätzlich eine Permutation D angewandt wird auf: (i) Ausgangswerte der SubBytes Transformation oder der kombinierten SubBytes Transformation oder der AddRoundKey Transformation; und (ii) Verschleierungswerte y, die ggf. mit der zufälligen invertierbaren Abbildung $\sigma$ maskiert sind.

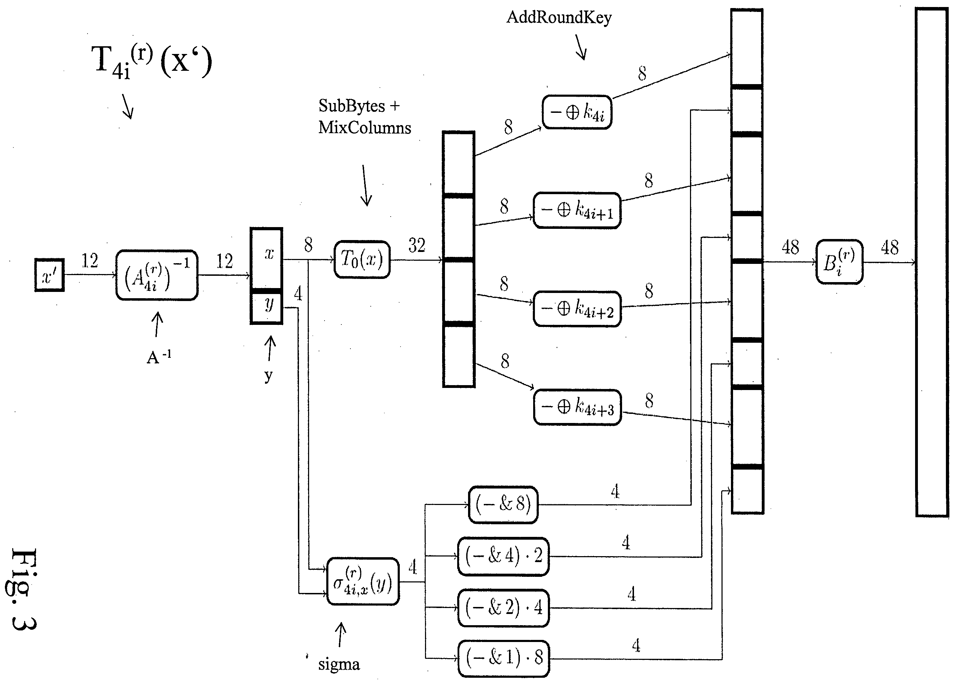

Gemäß einer speziellen Ausführungsform der Erfindung, ist die AddRoundKey Transformation in Gestalt einer schlüsselabhängigen kombinierten Transformation T* (T(r) (4i+j) (x'), j=0,1,2,3; oder: S((A(r)j$^{-1}$(x) xor kj(r)); oder: A k$^{(0)}$ xor C$^{-1}$ (x)) vorgesehen. In der schlüsselabhängigen kombinierten Transformation T* sind kombiniert: (i) in zumindest einer oder jeder mittleren AES Runde und in der letzten AES Runde, wobei unter mittleren Runden die Runden mit Ausnahme der ersten und der letzten Runde verstanden werden, die AddRoundKey Transformation, angewandt auf Ausgangswerte der, ggf. kombinierten, SubBytes Transformation T (Fig. 3, Formel (12)); oder/ und (ii) in der ersten AES Runde, die AddRoundKey Transformation, angewandt auf unmaskierte, optional durch eine Permutation C bearbeitete, Runden-Eingangswerte x, wobei die Maskierungs-Abbildung A auf die Ausgangswerte der AddRoundKey Transformation angewandt ist (Formel (11)). Die Kombinationen (i), (ii) können einzeln oder gemeinsam vorliegen. Bevorzugt sind (i) und (ii) beide verwirklicht, um die AddRoundKey Transformation wie erforderlich in allen Runden des AES unterzubringen.

Wahlweise sind die Ausgangswerte der, ggf. kombinierten, SubBytes Transformation T durch vier State Bytes x= sj, j = 0, 1, 2, 3, gebildet, wobei die AddRoundKey Transformation nur auf manche State Bytes angewandt wird, aber nicht auf alle State Bytes angewandt wird.

Die in den letzten beiden Absätzen angeführte schlüsselabhängige kombinierte Transformation ist gemäß Ausführungsformen der Erfindung durch zumindest eine schlüsselabhängige Tabelle dargestellt. Diese Tabelle ist in der Prozessor-Einrichtung implementiert. Zur Ausführung des AES werden Tabellenaufrufe in dieser Tabelle ausgeführt.

Die Prozessor-Einrichtung umfasst gemäß einer weiterbildenden Ausführung der Erfindung weiter eine Schlüssel-Aktualisierungs-Einrichtung, die dazu eingerichtet ist, den Rundenschlüssel k in der schlüsselabhängigen Tabelle durch eine neuen Rundenschlüssel k' zu ersetzen und hierdurch eine aktualisierte schlüsselabhängige Tabelle zu erzeugen. In der praktischen Anwendung einer Implementierung des AES auf einer Prozessor-Einrichtung ist es wünschenswert eine solche Schlüssel-Aktualisierungs-Einrichtung zu haben.

Die Schlüssel-Aktualisierungs-Einrichtung ist gemäß Ausführungsformen dazu eingerichtet, aus dem Rundenschlüssel, dem neuen Rundenschlüssel und ein oder mehrerer zur White Box Maskierung verwendeter Abbildungen, insbesondere der Abbildungen A oder/und B oder / und $\sigma$ oder / und C, Differenzschlüsseldaten zu bilden, und durch Anwenden der Differenzschlüsseldaten auf die schlüsselabhängige Tabelle die aktualisierte schlüsselabhängige Tabelle zu bilden. Mittels der Differenzschlüsseldaten kann auf effiziente Weise die Tabelle für den neuen Rundenschlüssel berechnet werden, da es nicht erforderlich ist, die komplette Tabelle für den neuen Rundenschlüssel von Grund auf neu zu berechnen.

Der AES ist gemäß einer effizienzorientierten Ausführungsform als AES256 mit einer Schlüssellänge von 256 Bit gestaltet und umfasst 14 Runden, wobei für die auf die Runden-Eingangswerte x angewandte invertierbare affine Abbildung A, zugunsten der Effizienz, in den Runden 9, 11 und 13 dieselbe Maskierungs-Abbildung A verwendet wird. Alternativ ist der AES als AES128 oder AES192 gestaltet, wobei in den entsprechenden geeigneten Runden dieselbe Maskierungs-Abbildung A verwendet wird.

Kurze Beschreibung der Zeichnungen

Im Folgenden wird die Erfindung an Hand von Ausführungsbeispielen und unter Bezugnahme auf die Zeichnung näher erläutert, in der zeigen:

Fig. 1    schematisch eine mittlere AES-Runde, nach dem Stand der Technik;

Fig. 2    eine Möglichkeit, die in [2] [Chow-AES], Fig. 1, Type II angedeutete White Box maskierte T-Box in einem Tabellenaufruf zu verwirklichen;

Fig. 3    eine von vier Tabellen, die die SubBytes, MixColumns und AddRoundKey Operationen einer AES-Runde auf State-Words mit den Indizes 0, 4, 8, 12 implementieren, gemäß einer Ausführungsform der Erfindung;

Fig. 4    die entsprechenden kombinierten Tabellen für die übrigen zwölf State - Word Indizes 1, 2, 3, 5, 6, 7, 9, 10, 11, 13, 14, 15.

Fig. 5    zwei bei manchen Ausführungsformel gültige Formeln (11), (12).

Detaillierte Beschreibung von Ausführungsbeispielen

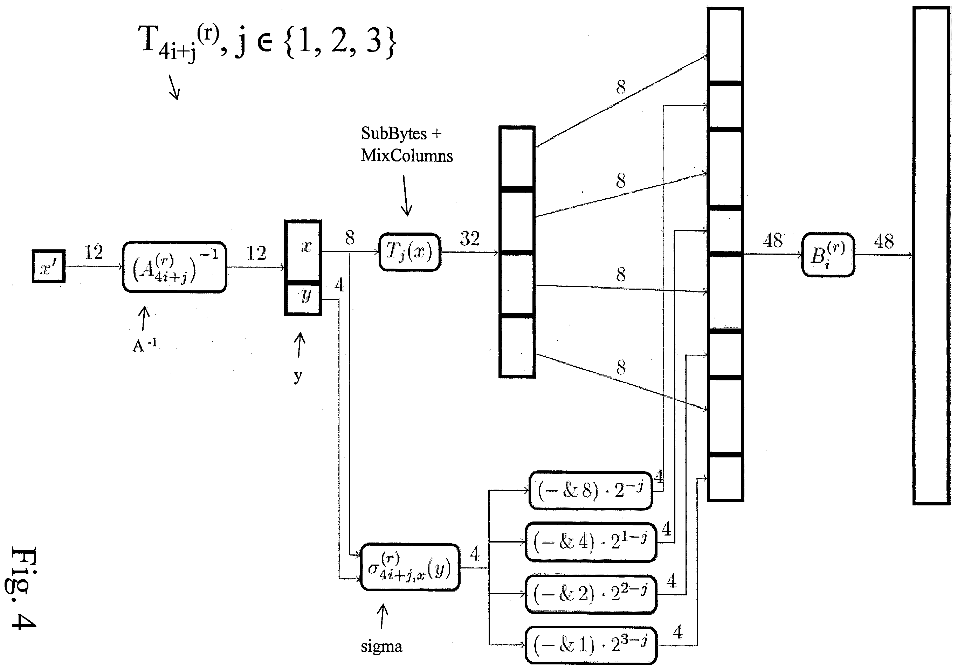

Fig. 3 zeigt eine von vier Tabellen, die die SubBytes, MixColumns und AddRoundKey Operationen einer AES-Runde auf State-Words mit den Indizes 0, 4, 8, 12 implementieren. Fig. 4 zeigt die entsprechenden kombinierten Tabellen für die übrigen zwölf State-Word Indizes 1, 2, 3, 5, 6, 7, 9, 10, 11, 13, 14, 15. Die Runden-Eingangswerte x der jeweiligen AES-Runde x werden mit Verschleierungswerten y konkateniert und mit einer Maskierungs-Abbildung A maskiert. Das Ergebnis dieser Operation sind Eingangswerte x' für die Abbildung T und somit für die in Fig. 3 und Fig. 4. dargestellten Tabellen. Die maskierte und gehärtete AES Implementierung ist somit durch eine Abbildung T gebildet, die aus den vier in Fig. 3 und 4 dargestellten Tabellen zusammengesetzt ist, also aus $T_{4i+1}{}^{(r)}(x') \mid T_{4i+2}{}^{(r)}(x') \mid T_{4i+3}{}^{(r)}(x') \mid T_{4i+4}{}^{(r)}(x')$, in Verbindung mit den Eingangswerten x'.

Es gibt drei AES-Varianten, nämlich mit Schlüssellängen 128 Bit, 192 Bit und 256 Bit, die sich nur in der Zahl der Runden und der Berechnung der Rundenschlüssel unterscheiden. Daher ist für jede dieser Schlüssellängen eine erfindungsgemäße Implementierung möglich.

Fig. 3 zeigt genauer eine durch eine Tabelle $T_{4i+1}{}^{(r)}(x')$ implementierte kombinierte Transformation, in der die Transformationen ShiftRows, SubBytes S, AddRoundKey und MixColumns kombiniert sind, sowie die Verschleierungswerte y. Die Transformationen SubBytes S und MixColumns einer Runde sind zu einer kombinierten SubBytes Transformation $T = T_0, T_1, T_2, T_3$ (d.h. die Tabelle T umfasst vier Einzeltabellen $T_0, T_1, T_2, T_3$) kombiniert, z.B. gemäß $T_0(x)$ = (02,01,02,03) S(x) ; Ti(x) = (03,02,02,01) S(x) ; $T_2(x)$ = (01,03,02,01) S(x) ; $T_3(x)$ = (01,01,03,02) S(x). Durch die vier je vierelementigen Vektoren (der besseren Lesbarkeit halber hier in Zeilenform mit Kommata dargestellt) vor den Sub-Bytes Transformationen S sind die Spalten der MixColumns Transformation dargestellt. Jede Spalte im Ergebnis der MixColumns /SubBytes Transformation ist die Summe der Einträge in den Tabellen Tj, j = 1,2,3,4, z.B. gemäß:
$T_0 (s_0 \: X \: k_0(r)) \: X \: T_1 (s_5 \: X \: k_5{}^{(r)}) \: X \: T_2 (s_{10} \: X \: k_{10}{}^{(r)}) \: X \: T_3 (s_{15} \: X \: k_{15}{}^{(r)})$ ; mit X = XOR.

Die Maskierungs-Abbildung A selbst ist in Fig. 3 (und 4) nicht dargestellt, lediglich die inverse Maskierungs-Abbildung $A^{-1}$, mit der die Maskierungs-Abbildung A vor der SubBytes Transformation S, hier in der Kombination mit MixColumns als T verwirklicht, wieder aufgehoben wird. Mittels der inversen Maskierungs-Abbildung $A^{-1}$ wird die Maskierung A auch von den Verschleierungswerten y entfernt. Die hierdurch demaskierten Verschleierungswerten y werden mit der - optional für jede Durchführen des AES neu zufällig festgelegten - Maskierungs-Abbildung sigma wieder maskiert, so dass also eine Ummaskierung von der langfristigen Maske A auf die ggf. bei jeder AES-Ausführung zufällig gewählte Maske sigma durchgeführt wird. Die Abbildung umfasst weiter eine Transformation B, in welcher die Einträge (d.h. die Ausgangswerte) der kombinierten SubBytes/MixColumns Transformation Tj(x) verschleiert werden.

Gemäß Fig. 3 sind die Eingangswerte x' = A(x | y) 12 Bit groß. Nach der Demaskierung mit der inversen Maskierungs-Abbildung $A^{-1}$ liegen 8 Bit Runde-Eingangsdaten und vier Bit Verschleierungswerte y vor. Nach der kombinierten SubBytes / MixColumns Transformation Tj(x) liegen 32 Bit transformierte Runden-Eingangsdaten x vor, die in vier mal 8 Bit aufgespalten werden. Nun werden die Verschleierungswerte y mit den transformierten Runden-Eingangsdaten x zusammengeführt. Das Ergebnis des Zusammenführens wird mittels einer Transformation N expandiert auf 48 Bit.

Die nun vorliegenden 48 Bit liefern das Ausgangsmaterial für die Runden-Eingangswerte der nächsten AES-Runde.

Fig. 4 ist zu Fig. 3 analog aufgebaut, nur mit dem Unterschied, dass keine Rundenschlüssel einfließen.

Zitierter Stand der Technik

[1] [Bos] J.W. Bos, Ch. Hubain, W. Michiels, and Ph. Teuwen, "Differential Computation Analysis: Hiding your White-Box Designs is Not Enough", eprint.iacr.org/2015/753, http://ia.cr/2015/753

[2] [Chow-AES] S. Chow, P. Eisen, H. Johnson, P.C. van Oorschot, "White-Box Cryptography and an AES Implementation", in proceedings of the Ninth Workshop on Selected Areas in Cryptography (SAC 2002), pages 250-270, 2002

[3] [NIST-AES] NIST fips 197, "Announcing the ADVANCED ENCRYPTION STANDARD (AES), November 26, 2001.

[4] J. Daemen and V. Rijmen: The Design of Rijndael: AES - The Advanced Enncryption Standard. Information Security and Cryptography. Springer, 2002.

**Patentansprüche**

1. Prozessor-Einrichtung mit einer darauf implementierten ausführbaren White Box maskierten Implementierung des kryptographischen Algorithmus AES, der eine Mehrzahl von Runden umfasst, in denen unter Verwendung von Runden-Eingangswerten x Runden-Ausgangswerte erzeugt werden,

   - wobei jede Runde eine AddRoundKey Transformation umfasst, in welcher der Rundenschlüssel k verwendet wird, und eine SubBytes Transformation T umfasst,
   - wobei die Implementierung White Box maskiert ist, wozu am Runden-Eingang zumindest einer oder jeder Runde, anstelle der Runden-Eingangs-Werte x, maskierte Runden-Eingangs-Werte bereitgestellt sind, die vorab erzeugt worden sind, indem auf die Runden-Eingangswerte x eine invertierbare Maskierungs-Abbildung A angewandt worden ist,

   **dadurch gekennzeichnet, dass**
   die White Box maskierte Implementierung gehärtet ist, indem am Runden-Eingang der zumindest einen oder jeder Runde, anstelle der Runden-Eingangs-Werte x, White-Box-Runden-Eingangswerte x' bereitgestellt sind, welche gebildet sind aus einer Konkatenation von: (i) den mittels der invertierbaren Maskierungs-Abbildung A maskierten Runden-Eingangswerten x und (ii) Verschleierungswerten y, die ebenfalls mit der invertierbaren Maskierungs-Abbildung A maskiert sind; wobei aus den White-Box-Runden-Eingangswerte x' nur die (i) Runden-Eingangswerte x der SubBytes Transformation T zugeführt werden, und die (ii) maskierten Verschleierungswerte y nicht, wobei die Implementierung weiter innerhalb einer jeweiligen Runde umfasst:

   - eine Demaskierungs-Transformation der maskierten Eingangswerte x in den Runden-Eingangswerten x' vor der SubBytes-Transformation mittels einer zur Maskierungs-Abbildung A inversen Maskierungs-Abbildung $A^{-1}$, die eingerichtet ist, der SubBytes Transformation T nicht-maskierte Runden-Eingangswerte x zuzuführen,
   - sowie eine Ummaskierungs-Transformation der Verschleierungswerte y in den Runden-Eingangswerten x' von der Maskierungs-Abbildung A auf eine zufällige invertierbare Abbildung σ, die eingerichtet ist, aus mit der Maskierungs-Abbildung A maskierten Verschleierungswerten y mit der zufälligen invertierbaren Abbildung σ maskierte Verschleierungswerte y zu erzeugen, wobei weiter der Runden-Ausgang zumindest einer oder jeder Runde gehärtet wird, indem am Runden-Ausgang zumindest einer oder jeder Runde eine zufällige invertierbare affine Abbildung B angewandt wird, und zwar auf:

   (i) die mit zumindest der SubBytes Transformation T bearbeiteten Runden-Eingangswerte x und
   (ii) die mit zumindest der zufälligen invertierbaren Abbildung σ maskierten Verschleierungswerte y.

2. Prozessor-Einrichtung nach Anspruch 1, wobei an Stelle der SubBytes Transformation eine kombinierte SubBytes Transformation T verwendet wird, welche durch eine Kombination einer herkömmlichen AES SubBytes Transformation S und einer AES MixColumns Transformation MC gebildet ist, gemäß T(x) = (MC) S(x).

3. Prozessor-Einrichtung nach einem der Ansprüche 1 bis 2, wobei die affine Abbildung A weiter so gestaltet ist, dass jedes Bit in den Ausgabewerten der affinen Abbildung A von mindestens einem Bit aus den Verschleierungswerten y abhängt, wodurch erreicht wird, dass die Ausgabewerte der affinen Abbildung A statistisch ausgeglichen sind.

4. Prozessor-Einrichtung nach Anspruch 3, wobei die statistische Ausgeglichenheit dadurch erreicht wird, dass die Maskierungs-Abbildung A durch eine Matrix A gebildet ist, in der für die Abbildung der Verschleierungswerte y invertierbare Teilmatrices bereitgestellt sind, wobei in jeder Zeile jeder für Verschleierungswerte y bereitgestellten Teilmatrix mindestens ein Wert einen von Null unterschiedlichen Wert hat.

5. Prozessor-Einrichtung nach einem der Ansprüche 1 bis 4, wobei die Maskierungs-Abbildung A

   - durch eine invertierbare affine Abbildung gebildet ist; oder
   - aus einer oder mehreren affinen invertierbaren Abbildungen und einer oder mehreren beliebigen invertierbaren Abbildungen zusammengesetzt ist, so dass die Maskierungs-Transformation insgesamt invertierbar ist.

6. Prozessor-Einrichtung nach einem der Ansprüche 1 bis 5, wobei der AES eine letzte Runde umfasst, die keine MixColumns Transformation umfasst, und wobei in der letzten Runde zusätzlich eine Permutation D angewandt wird auf: (i) Ausgangswerte der SubBytes Transformation oder der kombinierten SubBytes Transformation oder der AddRoundKey Transformation; und (ii) Verschleierungswerte y, die ggf. mit der zufälligen invertierbaren Abbildung σ maskiert sind.

7. Prozessor-Einrichtung nach einem der Ansprüche 1 bis 6, wobei die AddRoundKey Transformation in Gestalt einer schlüsselabhängigen kombinierten Transformation T* (T(r) (4i+j) (x'), j=0,1,2,3; oder: S ((A(r)j$^{-1}$(x) xor kj(r)); oder: A k$^{(0)}$ xor C$^{-1}$ (x)) vorgesehen ist, in welcher kombiniert sind:

(i) in zumindest einer oder jeder mittleren AES Runde und in der letzten AES Runde, wobei unter mittleren Runden die Runden mit Ausnahme der ersten und der letzten Runde verstanden werden, die AddRoundKey Transformation, angewandt auf Ausgangswerte der, ggf. kombinierten, SubBytes Transformation T; oder/und
(ii) in der ersten AES Runde, die AddRoundKey Transformation, angewandt auf unmaskierte, optional durch eine Permutation C bearbeitete, Runden-Eingangswerte x, wobei die Maskierungs-Abbildung A auf die Ausgangswerte der AddRoundKey Transformation angewandt ist.

8. Prozessor-Einrichtung nach Anspruch 7, wobei die Ausgangswerte der, ggf. kombinierten, SubBytes Transformation T durch vier State Bytes x= sj, j = 0, 1, 2, 3, gebildet sind, wobei die AddRoundKey Transformation nur auf manche State Bytes angewandt wird, aber nicht auf alle State Bytes angewandt wird.

9. Prozessor-Einrichtung nach Anspruch 7 oder 8, umfassend zumindest eine schlüsselabhängige Tabelle, durch die eine Tabellendarstellung der schlüsselabhängigen kombinierten Transformation gebildet ist.

10. Prozessor-Einrichtung nach Anspruch 9, weiter umfassend eine Schlüssel-Aktualisierungs-Einrichtung, die dazu eingerichtet ist, den Rundenschlüssel k in der schlüsselabhängigen Tabelle durch eine neuen Rundenschlüssel k' zu ersetzen und hierdurch eine aktualisierte schlüsselabhängige Tabelle zu erzeugen.

11. Prozessor-Einrichtung nach Anspruch 10, wobei die Schlüssel-Aktualisierungs-Einrichtung dazu eingerichtet ist, aus dem Rundenschlüssel, dem neuen Rundenschlüssel und ein oder mehrerer zur White Box Maskierung verwendeter Abbildungen, insbesondere der Abbildungen A oder/und B oder / und σ oder / und C, Differenzschlüsseldaten zu bilden, und durch Anwenden der Differenzschlüsseldaten auf die schlüsselabhängige Tabelle die aktualisierte schlüsselabhängige Tabelle zu bilden.

12. Prozessor-Einrichtung nach einem der Ansprüche 7 bis 11, wobei der AES als AES256 mit einer Schlüssellänge von 256 Bit gestaltet ist und 14 Runden umfasst, und wobei für die auf die Runden-Eingangswerte x angewandte invertierbare affine Abbildung A in den Runden 9, 11 und 13 dieselbe Maskierungs-Abbildung A verwendet wird, oder alternativ als analog zum AES256 gestalteter AES128 oder AES192.

**Claims**

1. A processor device having implemented thereon an executable white box-masked implementation of the cryptographic algorithm AES that comprises a plurality of rounds, in which round output values are produced employing round input values x,

- wherein each round comprises an AddRoundKey transformation in which the round key k is employed, and a SubBytes transformation T,
- wherein the implementation is white-box masked, for which purpose, at the round input of at least one or of each round, masked round input values are supplied instead of the round input values x, said masked round input values having been produced in advance by applying an invertible masking mapping A to the round input values x,

**characterized in that**
the white-box masked implementation is hardened **in that** at the round input of the at least one or of each round, white-box round input values x' are supplied instead of the round input values x, said white-box round input values being formed from a concatenation of: (i) the round input values x that are masked by means of the invertible masking mapping A and (ii) obfuscation values y that are likewise masked with the invertible masking mapping A; wherein from the white-box round input values x' only the (i) round input values x are fed to the SubBytes transformation T, and (ii) the masked obfuscation values y are not,
wherein the implementation further comprises within a respective round:

- an unmasking transformation of the masked input values x in the round input values x' before the SubBytes transformation by means of a masking mapping $A^{-1}$ that is inverse to the masking mapping A and that is adapted to feed non-masked round input values x to the SubBytes transformation T,

- and a remasking transformation of the obfuscation values y in the round input values x' from the masking mapping A to a random invertible mapping σ that is adapted to produce obfuscation values y masked with the random invertible mapping σ from the obfuscation values y masked with the masking mapping A, wherein further the round output of at least one or of each round is hardened **in that** a random invertible affine mapping B is applied at the round output of at least one or of each round, specifically to:

   (i) the round input values x processed with at least the SubBytes transformation T and
   (ii) the obfuscation values y masked with at least the random invertible mapping o.

2.  The processor device according to claim 1, wherein, instead of the SubBytes transformation, a combined SubBytes transformation T is employed that is formed by a combination of a conventional AES SubBytes transformation S and an AES MixColumns transformation MC, according to $T(x) = (MC) S(x)$.

3.  The processor device according to any of claims 1 to 2, wherein the affine mapping A is further configured such that each bit in the output values of the affine mapping A depends on at least one bit from the obfuscation values y, whereby it is achieved that the output values of the affine mapping A are statistically balanced.

4.  The processor device according to claim 3, wherein the statistical balance is achieved in that the masking mapping A is formed by a matrix A, in which invertible sub-matrices are supplied for the mapping of the obfuscation values y, wherein in each row of each sub-matrix supplied for obfuscation values y at least one value has a value different from zero.

5.  The processor device according to any of claims 1 to 4, wherein the masking mapping A

   - is formed by an invertible affine mapping; or
   - is composed of one or several affine invertible mappings and one or several arbitrary invertible mappings, so that the masking transformation is invertible as a whole.

6.  The processor device according to any of claims 1 to 5, wherein the AES comprises a last round that does not comprise a MixColumns transformation, and wherein in the last round a permutation D is additionally applied to: (i) output values of the SubBytes transformation or of the combined SubBytes transformation or of the AddRoundKey transformation; and (ii) obfuscation values y, which are possibly masked with the random invertible mapping o.

7.  The processor device according to any of claims 1 to 6, wherein the AddRoundKey transformation is provided in the form of a key-dependent combined transformation T* $(T(r) (4i+j) (x'), j = 0, 1, 2, 3;$ or: $S ((A(r)j^{-1}(x)$ xor $kj(r));$ or: $A k^{(0)}$ xor $C^{-1} (x))$, in which there are combined:

   (i) in at least one or each middle AES round and in the last AES round, wherein middle rounds are understood to mean the rounds with the exception of the first and the last round, the AddRoundKey transformation, applied to output values of the, possibly combined, SubBytes transformation T; or/ and
   (ii) in the first AES round, the AddRoundKey transformation, applied to non-masked round input values x optionally processed by a permutation C, wherein the masking mapping A is applied to the output values of the AddRoundKey transformation.

8.  The processor device according to claim 7, wherein the output values of the, possibly combined, SubBytes transformation T are formed by four state bytes $x = sj, j = 0, 1, 2, 3$, wherein the AddRoundKey transformation is applied only to some state bytes, but is not applied to all state bytes.

9.  The processor device according to claim 7 or 8, comprising at least one key-dependent table, by means of which a table representation of the key-dependent combined transformation is formed.

10.  The processor device according to claim 9, further comprising a key update device adapted to replace the round key k in the key-dependent table by a new round key k' and to produce an updated key-dependent table thereby.

11.  The processor device according to claim 10, wherein the key update device is adapted to form differential key data from the round key, the new round key and one or several mappings employed for the white-box masking, in particular of the mappings A or/and B or/and σ or/and C, and to form the updated key-dependent table by applying the differential key data to the key-dependent table.

**12.** The processor device according to any of claims 7 to 11, wherein the AES is configured as an AES256 with a key length of 256 bits and comprises 14 rounds, and wherein for the invertible affine mapping A applied to the round input values x the same masking mapping A is employed in the rounds 9, 11 and 13, or alternatively as an AES128 or AES192 configured analogously to the AES256.

**Revendications**

**1.** Dispositif à processeur sur lequel est implémentée une implémentation exécutable, masquée en boîte blanche, d'un algorithme cryptographique AES comprenant une pluralité de rondes, dans lequel, en utilisant des valeurs d'entrée de ronde x, des valeurs de sortie de ronde sont générées,

- cependant que chaque ronde comprend une transformation AddRoundKey dans laquelle la clé de ronde k est utilisée, et comprend une transformation SubBytes T,
- cependant que l'implémentation est masquée en boîte blanche, aux fins de quoi, à l'entrée de ronde d'au moins une ou de chaque ronde, au lieu des valeurs d'entrée de ronde x, des valeurs d'entrée de ronde masquées sont mises à disposition, lesquelles ont été auparavant générées, ce qui a eu lieu en ce que, aux valeurs d'entrée de ronde x, une application de masquage A inversible a été appliquée,

**caractérisé en ce que**

l'implémentation masquée en boîte blanche est durcie, ce qui a lieu **en ce que**, à l'entrée de ronde de la moins une ou de chaque ronde, au lieu des valeurs d'entrée de ronde x, des valeurs d'entrée de ronde en boîte blanche sont mises à disposition, lesquelles sont constituées à partir d'une concaténation de : (i) les valeurs d'entrée de ronde x masquées au moyen de l'application de masquage A inversible, et (ii) les valeurs d'obfuscation y masquées aussi avec l'application de masquage A inversible ; cependant que, à partir des valeurs d'entrée de ronde x' en boîte blanche, uniquement les (i) valeurs d'entrée de ronde x sont amenées à la transformation SubBytes T, et que les (ii) valeurs d'obfuscation y masquées ne le sont pas,

cependant que l'implémentation comprend en outre à l'intérieur d'une ronde respective :

- une transformation de démasquage des valeurs d'entrée de ronde x masquées en les valeurs d'entrée de ronde x' avant la transformation SubBytes au moyen d'une application de masquage A⁻¹ inverse de l'application de masquage A, laquelle est conçue pour amener à la transformation SubBytes T des valeurs d'entrée de ronde x non masquées,
- ainsi qu'une transformation de remasquage des valeurs d'obfuscation y en les valeurs d'entrée de ronde x' de l'application de masquage A à une application σ inversible aléatoire conçue pour, à partir des valeurs d'obfuscation y masquées avec l'application de masquage A, générer des valeurs d'obfuscation y masquées avec l'application σ inversible aléatoire,

cependant que, en outre, la sortie de ronde d'au moins une ou de chaque ronde est durcie, ce qui a lieu **en ce que**, à la sortie de ronde d'au moins une ou de chaque ronde, une application affine B inversible aléatoire est appliquée, à savoir à :

(i) les valeurs d'entrée de ronde x traitées avec au moins la transformation SubBytes, et
(ii) les valeurs d'obfuscation y masquées avec au moins l'application σ inversible aléatoire.

**2.** Dispositif à processeur selon la revendication 1, cependant que, au lieu de la transformation SubBytes, une transformation SubBytes T combinée est utilisée, laquelle est constituée par une combinaison d'une transformation AES SubBytes S traditionnelle et d'une transformation AES MixColumns MC, suivant T(x) = (MC) S(x).

**3.** Dispositif à processeur selon une des revendications de 1 à 2, cependant que l'application affine A est en outre configurée de telle façon que chaque bit dans les valeurs émises de l'application affine A dépend d'au moins un bit des valeurs d'obfuscation y, ce par quoi il est obtenu que les valeurs émises de l'application affine A sont statistiquement équilibrées.

**4.** Dispositif à processeur selon la revendication 3, cependant que l'équilibre statistique est obtenue en ce que l'application de masquage A est constituée par une matrice A dans laquelle, pour l'application des valeurs d'obfuscation y, des matrices partielles inversibles sont mises à disposition, cependant que, dans chaque ligne de chaque matrice partielle mise à disposition pour des valeurs d'obfuscation y, au moins une valeur a une valeur différente de zéro.

5. Dispositif à processeur selon une des revendications de 1 à 4, cependant que l'application de masquage A

   - est constituée par une application affine inversible ; ou
   - est composée d'une ou de plusieurs applications affines inversibles et d'une ou de plusieurs applications inversibles quelconques, de telle sorte que la transformation de masquage est inversible dans son ensemble.

6. Dispositif à processeur selon une des revendications de 1 à 5, cependant que le AES comprend une dernière ronde qui ne comprend pas de transformation MixColumns, et cependant que, à la dernière ronde, en plus une permutation D est appliquée à : (i) des valeurs de sortie de la transformation SubBytes ou de la transformation SubBytes combinée ou de la transformation AddRoundKey ; et (ii) des valeurs d'obfuscation y qui sont éventuellement masquées avec l'application $\sigma$ inversible aléatoire.

7. Dispositif à processeur selon une des revendications de 1 à 6, cependant que la transformation AddRoundKey est prévue sous la forme d'une transformation $T^*$ $(T(r) (4i+j) (x')$, j=0,1,2,3; ou : S $((A(r)_j^{-1}(x)$ xor $k_j(r)$; ou : A $k^{(0)}$ xor $C^{-1}$ $(x)$, dans laquelle sont combinées :

   (i) dans au moins une ou chaque ronde AES intermédiaire et dans la dernière ronde AES, cependant que l'on entend sous rondes intermédiaires les rondes à l'exception de la première et de la dernière ronde, la transformation AddRoundKey, appliquée à des valeurs de sortie de la transformation SubBytes T, éventuellement combinée ; ou/et
   (ii) dans la première ronde AES, la transformation AddRoundKey, appliquée à des valeurs d'entrée de ronde x non masquées, en option traitées par une permutation C, cependant que l'application de masquage A est appliquée à des valeurs de sortie de la transformation AddRoundKey.

8. Dispositif à processeur selon la revendication 7, cependant que les valeurs de sortie de la transformation SubBytes T, éventuellement combinées, sont constituées par quatre State Bytes x= $s_j$, j = 0, 1, 2, 3, cependant que la transformation AddRoundKey est appliquée seulement à certains State Bytes mais n'est pas appliquée à tous les State Bytes.

9. Dispositif à processeur selon la revendication 7 ou 8, comprenant au moins un tableau dépendant d'une clé par lequel une représentation en tableau, de la transformation combinée dépendant d'une clé est constituée.

10. Dispositif à processeur selon la revendication 9, comprenant en outre un dispositif d'actualisation de clé conçu pour remplacer la clé de ronde k, dans le tableau dépendant d'une clé, par une nouvelle clé de ronde k' et pour générer ainsi un tableau actualisé dépendant d'une clé.

11. Dispositif à processeur selon la revendication 10, cependant que le dispositif d'actualisation de clé est conçu pour, à partir de la clé de ronde, de la nouvelle clé de ronde et d'une ou plusieurs applications utilisées pour le masquage en boîte blanche, en particulier des applications A ou/et B ou/et $\sigma$ ou/ et C, constituer des données de clé de différence, et pour, par application des données de clé de différence au tableau dépendant d'une clé, constituer le tableau actualisé dépendant d'une clé.

12. Dispositif à processeur selon une des revendications de 7 à 11, cependant que le AES est configuré en tant que AES256 ayant une longueur de clé de 256 bits et comprend 14 rondes, et cependant que, pour l'application affine A affine inversible appliquée aux valeurs d'entrée de ronde x, dans les rondes 9, 11 et 13 la même application de masquage A est utilisée, ou, comme alternative, en tant que AES128 ou AES192 configuré de manière analogue à AES256.

$$(x) \xrightarrow{\text{ShiftRows}} (x) \xrightarrow{\text{AddRoundKey}} (x \oplus k) \xrightarrow{\text{SubBytes}} S(x \oplus k) \xrightarrow{\text{Mix Columns}}$$

Stand der Technik – mittlere AES Runde

Fig. 1

$$\boxed{x'} \xrightarrow{8} \boxed{\left(A_{4i+j}^{(r)}\right)^{-1}} \xrightarrow{8} \boxed{x} \xrightarrow{8} \boxed{T_j\left(x \oplus k_{4i+j}^{(r)}\right)} \xrightarrow{32} \quad \xrightarrow{32} \boxed{B_i^{(r)}} \xrightarrow{32}$$

Stand der Technik - [1] [Chow-AES]

Fig. 2

$$\left(A_0^{(0)} \| \ldots \| A_{15}^{(0)}\right)\left(k^{(0)} \oplus C^{-1}(x)\right) \tag{11}$$

$$F_j(x') = D_j\left(S\left(\left(A_j^{(r)}\right)^{-1}(x)\right) \oplus k_j^{(r)}\right) \cdot 16 + \sigma_{j,x}^{(r)}(y)\right), \tag{12}$$

Fig. 5

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   WO 102014016548 A

**In der Beschreibung aufgeführte Nicht-Patentliteratur**

*   *Announcing the ADVANCED ENCRYPTION STANDARD (AES),* 26. November 2001
*   **RUNDEN.** Der AES umfasst eine Anzahl
*   **S. CHOW ; P. EISEN ; H. JOHNSON ; P.C. VAN OORSCHOT.** White-Box Cryptography and an AES Implementation. *in proceedings of the Ninth Workshop on Selected Areas in Cryptography (SAC 2002),* 2002, 250-270
*   **J.W. BOS ; CH. HUBAIN ; W. MICHIELS ; PH. TEUWEN.** *Differential Computation Analysis: Hiding your White-Box Designs is Not Enough*
*   **J.W. BOS ; CH. HUBAIN ; W. MICHIELS ; PH. TEUWEN.** Differential Computation Analysis: Hiding your White-Box Designs is Not Enough. *http://ia.cr/2015/753*
*   **S. CHOW ; P. EISEN ; H. JOHNSON ; P.C. VAN OORSCHOT.** White-Box Cryptography and an AES Implementation. *proceedings of the Ninth Workshop on Selected Areas in Cryptography (SAC 2002),* 2002, 250-270
*   The Design of Rijndael: AES - The Advanced Encryption Standard. **J. DAEMEN ; V. RIJMEN.** Information Security and Cryptography. Springer, 2002